(19) Europäisches Patentamt
European Patent Office
Office européen des brevets

(11) Veröffentlichungsnummer: **0 291 939 B1**

# (12) EUROPÄISCHE PATENTSCHRIFT

(45) Veröffentlichungstag der Patentschrift: **12.01.94**

(51) Int. Cl.5: **C08G 77/06**, C08J 3/16

(21) Anmeldenummer: **88107912.3**

(22) Anmeldetag: **18.05.88**

Die Akte enthält technische Angaben, die nach dem Eingang der Anmeldung eingereicht wurden und die nicht in dieser Patentschrift enthalten sind.

## (54) Verfahren zu Herstellung von Siliconharzpulvern.

(30) Priorität: **21.05.87 DE 3717073**

(43) Veröffentlichungstag der Anmeldung:
**23.11.88 Patentblatt 88/47**

(45) Bekanntmachung des Hinweises auf die Patenterteilung:
**12.01.94 Patentblatt 94/02**

(84) Benannte Vertragsstaaten:
**AT BE CH DE ES FR GB IT LI NL SE**

(56) Entgegenhaltungen:
**EP-A- 242 219**
**EP-A- 279 373**
**DE-A- 3 022 308**
**US-A- 3 433 780**
**US-A- 3 634 321**
**US-A- 4 424 297**

(73) Patentinhaber: **WACKER-CHEMIE GMBH**
**Hanns-Seidel-Platz 4**
**D-81737 München(DE)**

(72) Erfinder: **Wolfgruber, Matthias, Dr. Dipl.-Chem.**
**Moosbrunnerstrasse 13**
**D-8263 Burghausen(DE)**
Erfinder: **Deubzer, Bernward, Dr. Dipl.-Chem.**
**Virchowstrasse 14**
**D-8263 Burghausen(DE)**
Erfinder: **Frey, Volker, Dr. Dipl.-Chem.**
**Jahnweg 5**
**D-8263 Burghausen(DE)**

**EP 0 291 939 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

In US 4,528,390 (ausgegeben 09. Juli 1985, Hiroshi Kimura, Toshiba Silicone Co., Ltd.) sind pulverförmige Polymethylsilsesquioxane beschrieben. Die Darstellung erfolgt durch hydrolytische Kondensation von Methyltrimethoxysilan im ammoniakalischen Milieu mit anschließendem Waschen und Trocknen des Niederschlages.

In US 3,383,773 (ausgegeben 21. Mai 1968, D.C. Nugent, Owens-Illinois Inc.) ist ein Verfahren zur reproduzierbaren Trocknung von Organopolysiloxanen, hergestellt durch hydrolytische Kondensation von Methyl- und Phenyltrialkoxysilanen, beschrieben. Hierbei werden in Methylenchlorid gelöste Organopolysiloxane sprühgetrocknet.

In US-A 3,634,321 wird ein Siliconharz beschrieben, das hergestellt wird durch

(1) Umsetzung eines Organotrialkoxysilans mit Wasser in Gegenwart von Säurespuren,

(2) Bildung eines flüssigen Films von dem Präpolymer in Ethanol,

(3) Erhitzen des Films bei einer Temperatur von 90 °C bis 180 °C, um ein in einem Lösungsmittel lösliches vorvernetztes Polymer zu erhalten und

(4) Sprühtrocknung des vorvernetzten Polymers.

Die so erhaltenen Pulver sind weiter vernetzbare vorvernetzte Polymere, welche zur Herstellung von Beschichtungen verwendet werden können.

Aus DE-A 30 22 308 ist ein Verfahren zur Herstellung eines hydrolysierten Teilkondensationsprodukts eines Alkoxysilans bekannt, bei dem ein Alkoxysilan oder eine Mischung aus Alkoxysilanen in Gegenwart eines hydrolysierten Teilkondensationsprodukts eines Trialkoxysilans als Katalysator einer Hydrolyse und Kondensationsreaktion unterzogen wird. Das so erhaltene hydrolysierte Teilkondensationsprodukt eines Alkoxysilans ist wärmehärtbar und eignet sich zur Herstellung von Überzügen auf Plastikmaterial.

In EP-A 178 191 ist ein Siliconharz, das Disilaneinheiten enthält, beschrieben, das durch gleichzeitige Cohydrolyse und Kondensation einer Mischung von Diorganodichlorsilanen und Methylchlordisilanen sowie gegebenenfalls Organotrichlorsilanen in Gegenwart eines organischen Lösungsmittels erhalten wird. Das Disilaneinheiten aufweisende Siliconharz kann aus der organischen Phase durch Verdampfen des organischen Lösungsmittels als Pulver erhalten werden.

Es bestand die Aufgabe, Siliconharzpulver, deren chemische Zusammensetzung sowie Funktionalität der Siloxaneinheiten im großen Ausmaß variiert werden kann, mit Teilchengrößen im Bereich von 1 bis 100 µm, mit hohen verfügbaren Oberflächen, engen Korngrößenverteilungen und guten Fließeigenschaften herzustellen. Es bestand weiterhin die Aufgabe, ein Verfahren bereitzustellen, mit dem diese feinteiligen Siliconharzpulver reproduzierbar und auf technisch einfache Weise ohne Anwendung aufwendiger mechanischer Mahlprozesee und ohne Klassier- oder Filtrierschritte erhalten werden. Diese Aufgaben werden durch die Erfindung gelöst.

Gegenstand der Erfindung ist ein Verfahren zur Herstellung von Siliconharzpulvern aus wäßrigen kolloidalen Suspensionen von Organopolysiloxanen, die durch Zugabe von Alkoxysilan zu Wasser in Gegenwart eines Emulgators gewonnen werden, dadurch gekennzeichnet, daß wäßrige kolloidale Suspensionen von bei Raumtemperatur festen Organopolysiloxanen mit einer durchschnittlichen Teilchengröße von 10 bis 150 nm, die durch Zugabe von mindestens einem Alkoxysilan und/oder dessen Teilhydrolysat und gegebenenfalls im Gemisch mit von Alkoxygruppen freiem Organo(poly)siloxan mit höchstens 8 Siloxaneinheiten je Molekül zu Wasser in Gegenwart von Emulgator mit einer Geschwindigkeit von höchstens 5 Mol Organosiliciumverbindung je Stunde und Liter Wasser und anschließender Abdestillation des hydrolytisch gebildeten Alkanols gewonnen werden, sprühgetrocknet werden, wobei die bei Raumtemperatur festen Organopolysiloxane unter dem Einfluß der Trocknungsbedingungen keine Neigung zum Schmelzen oder Verfilmen aufweisen, die Eintrittstemperatur des Trockengassroms 100 °C bis 300 °C und die Austrittstemperatur des beim Trocknen gebildeten Gasstroms 60 °C bis 100 °C beträgt und die Siliconharzpulver Teilchengrößen im Bereich von 1 bis 100 µm aufweisen.

Zur Herstellung der erfindungsgemäßen Siliconharzpulver bzw. bei dem erfindungsgemäßen Verfahren werden wäßrige kolloidale Suspensionen von bei Raumtemperatur festen Organopolysiloxanen aus Einheiten der Formel

$$R_xSi(OR^1)_yO_{\frac{4-x-y}{2}}$$

eingesetzt, wobei x 0, 1, 2 oder 3, durchschnittlich 1,0 bis 2,0 und y 0, 1 oder 2, durchschnittlich 0,0 bis 0,5 ist und worin R gleich oder verschieden sein kann, ein Wasserstoffatom oder einen einwertigen Kohlenwasserstoffrest mit 1 bis 8 Kohlenstoffatom(en) je Rest, der gegenüber Wasser inerte Substituenten aufweisen kann, bedeutet und $R^1$ gleich oder verschieden sein kann, ein Wasserstoffatom oder einen Alkyl- oder Alkoxyalkylenrest mit jeweils 1 bis 4 Kohlenstoffatom(en) je Rest bedeutet.

Zur Herstellung der erfindungsgemäßen Siliconharzpulver bzw. bei dem erfindungsgemäßen Verfahren werden nur solche bei Raumtemperatur feste Organopolysiloxane eingesetzt, die unter dem Einfluß der Trocknungsbedingungen keine Neigung zum Schmelzen oder Verfilmen aufweisen.

Die zur Herstellung der erfindungsgemäßen Siliconharzpulver bzw. bei dem erfindungsgemäßen Verfahren eingesetzten wäßrigen kolloidalen Suspensionen von bei Raumtemperatur festen Organopolysiloxanen haben einen durchschnittlichen Teilchendurchmesser von 10 bis 150 nm .

Die zur Herstellung der erfindungsgemäßen Siliconharzpulver bzw. bei dem erfindungsgemäßen Verfahren verwendeten wäßrigen kolloidalen Suspensionen von bei Raumtemperatur festen Organopolysiloxanen sind in US 3 433 780 (ausgegeben 18. März 1969, J. Cekada, Jr. und D.R. Weyenberg, Dow Corning Corporation) und in US 4 424 297 (ausgegeben 3. Januar 1984, A.E. Bey, Dow Corning Corporation) sowie in der gleichzeitig eingereichten Patentanmeldung mit der internen Bezeichnung Wa 8634-S beschrieben.

Bei der Herstellung der erfindungsgemäßen Siliconharzpulver bzw. bei dem erfindungsgemäßen Verfahren werden Silane oder Gemische von Silanen der Formel

$R_xSi(OR^2)_{4-x}$

eingesetzt,wobei x und R jeweils die oben dafür angegebene Bedeutung haben und wobei $R^2$ gleich oder verschieden sein kann, einen Alkyl- oder Alkyloxyalkylenrest mit 1 bis 4 Kohlenstoffatom(en) je Rest oder einen Rest der Formel $-COCH_3$, $-COC_2H_5$ oder $-CH_2CH_2OH$ bedeutet.

Wird nur eine einzige Art eines derartigen Silans verwendet, so muß x naturlich den Wert 1 haben.

Vorzugsweise werden Gemische von mindestens zwei verschiedenen Silanen der vorstehend genannten Formel mit verschiedenem Wert von x verwendet.

Besonders bevorzugt werden Gemische von Silanen der Formel $RSi(OR^2)_3$ und $R_2Si(OR^2)_2$, worin R und $R^2$ jeweils die oben dafür angegebene Bedeutung haben und wobei $RSi(OR^2)_3$ und $R_2Si(OR^2)_2$ vorzugsweise im Molverhältnis von 0,4 bis 2,3 eingesetzt werden.

Bei der Herstellung der erfindungsgemäßen Siliconharzpulver bzw. bei dem erfindungsgemäßen Verfahren können auch Teilhydrolysate der vorstehend genannten Silane bzw. Silangemische mit nicht mehr als 10 Si-Atomen je Teilhydrolysat eingesetzt werden.

Es werden selbstverständlich solche Silane bzw. Silangemische oder solche Teilhydrolysate dieser Silane bzw. Silangemische verwendet, die zu bei Raumtemperatur festen Organopolysiloxanen führen.

Zur Herstellung der erfindungsgemäßen Siliconharzpulver bzw. dem erfindungsgemäßen Verfahren können gegebenenfalls von Alkoxygruppen freie Organo(poly)siloxane mit höchstens 8 Siloxaneinheiten je Molekül im Gemisch mit mindestens einem Alkoxysilan und/oder dessen Teilhydrolysat eingesetzt werden. Als Organo(poly)siloxane mit höchstens 8 Siloxaneinheiten je Molekül können beispielsweise lineare Organo(poly)siloxane der Formel

$R_3SiO(SiR_2O)_nSiR_3$

verwendet werden, wobei n 0 oder eine ganze Zahl im Wert von 1 bis 6 ist und worin R die oben dafür angegebene Bedeutung hat. Vorzugsweise ist n 0 und besonders bevorzugt ist Hexamethyldisiloxan. Als Organo(poly)siloxane mit höchstens 8 Siloxaneinheiten je Molekül können beispielsweise auch cyclische Organo(poly)siloxane der Formel

$(R_2SiO)_m$

verwendet werden, wobei m eine ganze Zahl im Wert von 3 bis 8, vorzugsweise 4, ist und worin R die oben dafür angegebene Bedeutung hat.

Als Organo(poly)siloxan im Gemisch mit mindestens einem Alkoxysilan wird vorzugsweise Hexaorganodisiloxan im Gemisch mit Tetraalkoxysilan im Molverhältnis von 0,25 bis 1,0 eingesetzt. Besonders bevorzugt wird Hexamethyldisiloxan im Gemisch mit Tetraethylsilikat im Molverhältnis von 0,25 bis 1,0 eingesetzt.

Des weiteren wird als Organo(poly)siloxan im Gemisch mit mindestens einem Alkoxysilan vorzugsweise cyclisches Organosiloxan im Gemisch mit Trialkoxysilan, insbesondere tetrameres cyclisches Organosiloxan

im Gemisch mit Trialkoxysilan eingesetzt.

Es werden nur solche Gemische von Alkoxygruppen freiem Organo(poly)siloxan mit höchstens 8 Siloxaneinheiten je Molekül und Alkoxysilan verwendet, die zu bei Raumtemperatur festen Organopolysiloxanen führen.

Beispiele für Kohlenwasserstoffreste als SiC-gebundene organische Reste und damit ebenfalls als Reste R in den oben angegebenen Formeln sind Alkylreste, wie der Methyl-, Ethyl-, n-Propyl-, Isopropyl-, n-Butyl-, sec.-Butyl-, Amyl-, Hexyl-, β-Ethylhexyl- und Heptylrest; Alkenylreste, wie der Vinyl-und Allylrest und Butenylreste; Alkinylreste; Cycloalkylreste, wie der Cyclobutyl- und Cyclohexylrest und Methylcyclohexylreste; Arylreste, wie der Phenylrest; Alkarylreste, wie Tolylreste; und Aralkylreste, wie der Benzylrest. Besonders bevorzugt sind der Methyl-, Vinyl- und Phenylrest.

Beispiele für substituierte Kohlenwasserstoffreste als SiC-gebundene organische Reste und damit ebenfalls als Reste R in den oben angegebenen Formeln sind halogenierte Kohlenwasserstoffreste wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Aminoalkylreste, wie der 3-Aminopropyl-, N-(2-Aminoethyl)-3-aminopropyl- und N-(2-Aminoethyl)-3-amino(2-methyl)propylrest; Aminoarylreste, wie der Aminophenylrest; Acyloxyalkylreste, wie der 3-Acryloxy-propyl- und 3-Methacryloxypropylrest; Hydroxyalkylreste, wie der Hydroxypropylrest; und Reste der Formel

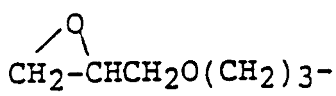

und

$HOCH_2CH(OH)CH_2SCH_2CH_2-$ .

Beispiele für Kohlenwasserstoffreste $R^1$ sind Alkylreste, wie der Methyl-, Ethyl-, n-Propyl-, Isopropyl-, n-Butyl-, sec.-Butyl- und tert.-Butylrest und Alkoxyalkylenreste, wie der Methoxyethylen- und Ethoxyethylenrest. Besonders bevorzugt sind der Methyl- und Ethylrest. Alle Beispiele für Kohlenwasserstoffreste $R^1$ gelten im vollen Umfang auch für die Kohlenwasserstoffreste $R^2$.

Die zur Herstellung der erfindungsgemäßen Siliconharzpulver bzw. bei dem erfindungsgemäßen Verfahren verwendeten Emulgatoren umfassen

Carbonsäuren mit 9 - 20 C-Atomen, aliphatisch-substituierte Benzolsulfonsäuren mit mindestens 6 C-Atomen in den aliphatischen Substituenten,

aliphatisch-substituierte Naphthalinsulfonsäuren mit mindestens 4 C-Atomen in den aliphatischen Substituenten, aliphatische Sulfonsäuren mit mindestens 6 C-Atomen in den aliphatischen Substituenten, Silylalkylsulfonsäuren mit mindestens 6 C-Atomen in den Alkylsubstituenten, aliphatischsubstituierte Diphenylethersulfonsäuren mit mindestens 6 C-Atomen in den aliphatischen Substituenten,

Alkylhydrogensulfate mit mindestens 6 C-Atomen in den Alkylsubstituenten, quaternäre Ammoniumhalogenide und quaternäre Ammoniumhydroxide. Alle genannten Säuren können als solche oder gegebenenfalls im Gemisch mit ihren Salzen verwendet werden.

Wenn anionische Emulgatoren eingesetzt werden, ist es vorteilhaft, solche zu verwenden, deren aliphatische Substituenten mindestens 8 und insbesondere 12 C-Atome enthalten. Spezielle Beispiele für aliphatische Substituenten sind Octyl-, Decyl-, Dodecyl-, Cetyl-, Stearyl-, Myricyl-, Oleyl-, Nonenyl-, Octinyl-, Phytyl- und Pentadecadienylreste. Aliphatisch substituierte Benzolsulfonsäuren sind als anionische Emulgatoren bevorzugt. Wenn kationische Emulgatoren benutzt werden, ist es vorteilhaft, Halogenide und insbesondere Chloride und Bromide zu verwenden.

Die Emulgatormenge kann, gemessen an der außerordentlich geringen Teilchengröße von 10 bis 150 nm der bei der Sprühtrocknung eingesetzten, wäßrigen kolloidalen Suspension von bei Raumtemperatur festen Organopolysiloxanen, ungewöhnlich gering sein. Der Emulgator wird vorzugsweise in Mengen von 0,5 bis 2,9 Gew.-%, besonders bevorzugt in Mengen von 1,5 bis 2,0 Gew.-%, jeweils bezogen auf das Gewicht der zur Herstellung der Siliconharzpulver gemäß Anspruch 1 eingesetzten Organosiliciumverbindung, verwendet.

Bei vielen Anwendungen können aber auswaschbare oder zur Diffusion fähige, an Grenzflächen sich anreichernde Emulgatoren störend wirken. Es können daher bei der Herstellung der erfindungsgemäß

einzusetzenden kolloidalen Suspensionen von Organopolysiloxanen anstelle der oben genannten Emulgatoren vorteilhafter Additionssalze von Essigsäure an 3-Aminopropyltrimethoxysilan oder 3-Aminopropyltriethoxysilan, besonders vorteilhaft Additionssalze von Essigsäure an N-(2-Aminoethyl)-3-aminopropyltrimethoxysilan oder N-(2-Aminoethyl)-3-aminopropyltriethoxysilan verwendet werden, die zusammen mit den erfindungsgemäß einzusetzenden Organosiliciumverbindungen hydrolysiert und kondensiert werden und dabei in das Organopolysiloxangerüst miteingebaut werden.

3-Aminopropyltrimethoxysilan bzw. 3-Aminopropyltriethoxysilan sowie N-(2-Aminoethyl)-3-aminopropyltrimethoxysilan bzw. N-(2-Aminoethyl)3-aminopropyltriethoxysilan wird dabei vorzugsweise in Mengen von 5 bis 20 Gew.-% und Essigsäure in Mengen von 4 bis 15 Gew.-%, jeweils bezogen auf das Gewicht der gemäß Anspruch 1 einzusetzenden Organosiliciumverbindung eingesetzt.

Des weiteren können auch Additionssalze von Natriumsulfit an 3-Glycidoxypropyltrimethoxysilan oder 3-Glycidoxypropyltriethoxysilan verwendet werden.

Die zur Herstellung der erfindungsgemäßen Siliconharzpulver bzw. bei dem erfindungsgemäßen Verfahren eingesetzten wäßrigen kolloidalen Suspensionen von bei Raumtemperatur festen Organopolysiloxanen werden vorzugsweise durch Zugabe von der im Anspruch 1 genannten Organosiliciumverbindung zu Wasser in Gegenwart von Emulgator mit einer Geschwindigkeit von höchstens 5 Mol Organosiliciumverbindung je Stunde und Liter Wasser, insbesondere von 0,5 bis 1,0 Mol Organosiliciumverbindung je Stunde und Liter Wasser, und anschließender Abdestillation des hydrolytisch gebildeten Alkanols hergestellt.Die zur Sprühtrocknung eingesetzten wäßrigen kolloidalen Suspensionen von bei Raumtemperatur festen Organopolysiloxanen können im sauren, neutralen oder alkalischen Milieu hergestellt werden. Die Herstellung erfolgt vorzugsweise bei 15 bis 90 °C,
besonders bevozugt bei 60 ° bis 85 °C,
und vorzugsweise beim Druck der umgebenden Atmosphäre, also bei 1020 hPa (abs.) oder etwa 1020 hPa (abs.), oder falls gewünscht, auch bei höheren oder niedrigeren Drücken.

Das Verfahren zur Herstellung der wäßrigen, kolloidalen Suspensionen von bei Raumtemperatur festen Organopolysiloxanen kann diskontinuierlich, halbkontinuierlich oder vollkontinuierlich durchgeführt werden. Vorzugsweise wird es vollkontinuierlich durchgeführt.

Die kolloidalen wäßrigen Suspensionen von bei Raumtemperatur festen Organopolysiloxanen werden vorzugsweise nach dem in der gleichzeitig eingereichten Patentanmeldung mit der internen Bezeichnung Wa 8634-S beschriebenen Verfahren hergestellt, bei dem kontinuierlich voneinander getrennt die im Anspruch 1 genannte Organosiliciumverbindung und das Wasser, wobei mindestens einer der beiden Stoffe Emulgator enthält, einem Reaktor zugeführt werden. Bei dem Reaktor kann es sich um einen Rohrreaktor, einen Rührkessel, eine Kesselkaskade, einen Kreislaufreaktor, einen Hordenreaktor oder andere gebräuchliche Reaktoren handeln. Der Reaktor ist gegebenenfalls mit einer Vorrichtung zum Wärmen oder Kühlen versehen. Bevorzugt wird ein Rohrreaktor eingesetzt, bei dem das Wasser am Anfang des Rohrreaktors und die Organosiliciumverbindung über mehrere Einspeisungsstellen, die entlang der Längsachse des Rohrreaktors angeordnet sind, kontinuierlich zugegeben werden. Nach einer Verweilzeit im Reaktor, die ausreicht, die eingesetzte Organosiliciumverbindung zu hydrolysieren und kondensieren, tritt die wäßrige Suspension aus dem Reaktor kontinuierlich aus. Die Verweilzeit beträgt mindestens 5 min vorzugsweise 30 bis 60 min. Aus der aus dem Reaktor austretenden wäßrigen Suspension wird das sich bei der Hydrolyse gebildete Alkanol kontinuierlich abdestilliert. Vorzugsweise wird das Alkanol über eine Kurzwegdestillation entfernt. Geeignet hierfür sind beispielsweise Dünnschichtverdampfer. Zur Erhöhung des Feststoffgehaltes an Organopolysiloxan wird die wäßrige Suspension wieder in den Reaktor kontinuierlich rückgeführt, wo ihr erneut kontinuierlich Organosiliciumverbindung und gegebenenfalls Emulgator zugeführt wird. Die wäßrige Suspension kann gegebenenfalls mehrmals im Kreis geführt werden, bis der gewünschte Feststoffgehalt an Organopolysiloxan erreicht wird. Ein Teil der anfallenden wäßrigen Suspension mit dem gewünschten Feststoffgehalt an Organopolysiloxan wird dann kontinuierlich abgenommen, der Rest wird in den Reaktor kontinuierlich rückgeführt und erneut kontinuierlich mit Wasser, Organosiliciumverbindung und Emulgator versetzt.

Die zur Herstellung der erfindungsgemäßen Siliconharzpulver bzw. bei dem erfindungsgemäßen Verfahren eingesetzten wäßrigen kolloidalen Suspensionen von bei Raumtemperatur festen Organopolysiloxanen weisen vorzugsweise einen Feststoffgehalt von bis zu 20 Gew.-%, jeweils bezogen auf das Gesamtgewicht der Suspension, auf. Die wäßrigen Suspensionen sind im wesentlichen frei von Alkanol und besitzen vorzugsweise einen Flammpunkt von über 55 °C (bestimmt nach DIN 53 213), wodurch sie sich für die Sprühtrocknung besonders gut eignen.

Die Sprühtrocknung kann in beliebigen zur Sprühtrocknung von Flüssigkeiten geeigneten und bereits vielfach bekannten Vorrichtungen, beispielsweise solchen mit mindestens einer Drallzerstäuberdüse oder mit einer rotierenden Zerstäuberscheibe, in einem vorzugsweise erwärmten Trockengasstrom durchgeführt

werden.

Es beträgt die Eintrittstemperatur des Trockengasstroms, wobei es sich meist um Luft handelt, 100 °C bis 300 °C, insbesondere 140 °C bis 180 °C und die Austrittstemperatur des beim Trocknen gebildeten Gasstroms 60 °C bis 100 °C, insbesondere 80 ° bis 90 °C.

Die erfindungsgemäßen Siliconharzpulver haben eine Partikelgröße von 1 bis 100 µm, sind sphärisch und besitzen eine enge Korngrößenverteilung. Sie können teilweise aus lockeren Agglomeraten der Primärteilchen (Teilchendurchmesser von 10 bis 150 nm) der kolloidalen Suspension bestehen. Dadurch können Pulver mit einer spezifischen Oberfläche von bis zu 500 $m^2/g$ (bestimmt durch Stickstoffadsorption gemäß ASTM Special Technical Publication No. 51, 1941, Seite 95 ff, also der sogenannten "BET"-Methode") gewonnen werden. Die erfindungsgemäßen Siliconharzpulver sind in Wasser nicht mehr redispergierbar.

Zusätzlich zu Organopolysiloxan und Emulgator können die erfindungsgemäßen Pulver gegebenenfalls weitere Stoffe enthalten und bei dem erfindungsgemaßen Verfahren gegebenenfalls weitere Stoffe mitversprüht werden.Beispiele für solche weiteren Stoffe sind bzw. können sein Fungicide, Antischaummittel, lösliche Farbstoffe, Pigmente, Füllstoffe mit einer Oberfläche von mindestens 50 $m^2/g$, wie pyrogen erzeugtes Siliciumdioxid und Füllstoffe mit einer Oberfläche von weniger als 50 $m^2/g$, wie Kreidepulver, nadelförmiges Calciumcarbonat und Quarzmehl.

Nach dem erfindungsgemäßen Verfahren werden Siliconharzpulver unterschiedlichster chemischer Zusammensetzung bzw. Funktionalität der Siloxaneinheiten erhalten, beispielsweise bestehend aus Monoorgano- und Diorganosiloxaneinheiten oder $SiO_{4/2}$-Einheiten und Triorganosiloxaneinheiten. Aber auch im Fall von aus gleichen Sioxaneinheiten, beispielsweise Siloxaneinheiten mit nur einem SiC-gebundenen organischen Rest, aufgebauten Siliconharzpulvern lassen sich je nach Herstellung der zur Sprühtrocknung eingesetzten wäßrigen kolloidalen Suspension von Organopolysiloxanen (Variation des pH-Wertes, des Emulgators oder der Temperatur) Pulver mit beispielsweise verschiedenen Schmelzpunkten oder Resthydroxy-bzw. Restalkoxygehalt erhalten.

Die Siliconharzpulver können anstatt hydrophobierter hochdisperser Kieselsäure verwendet werden, so beispielsweise als Füllstoffe in Kunststoffen. Weiterhin finden sie Verwendung als Zusatz zu Lack- und anderen Beschichtungssystemen, als Mattierungsmittel, als Zusatz zu Tonern oder als Rieselhilfsmittel für Feststoffe.

Beispiel 1:

a) In einem 5l Dreihalskolben mit Rührer, Tropftrichter, Thermometer und Destillationsaufsatz werden 3l Wasser und jeweils der in der Tabelle 1 angegebene Emulgator vorgelegt und auf 65 °C erwärmt. Unter Rühren wird bei 65 °C und etwa 300 hPa (abs.) innerhalb 5h die Organosiliciumverbindung aus Tabelle 1 durch eine in die Vorlage eintauchende Kapillare zudosiert. Das bei der Hydrolyse entstehende Methanol wird dabei abdestilliert, wobei der Druck so reguliert wird, daß das Volumen des Kolbeninhalts während der Silanzugabe konstant bleibt. Nach Beendigung der Silanzugabe wird bei 65 °C und etwa 300 hPa (abs.) konstant 1/2 Stunde weitergerührt. Die wäßrigen Suspensionen (A) bis (E) können dann gegebenenfalls durch ein Polyamidnetz filtriert werden.

Zur Herstellung der Suspensionen (C) und (D) wird Phenyltrimethoxysilan eingesetzt, wobei die Suspension (C) im sauren Milieu bei einem pH-Wert von 2,0, die Suspension (D) im alkalischen Milieu bei einem pH-Wert von 9,5 hergestellt wird.

Bei der Herstellung der Suspension (E) wird als Emulgator ein Additionssalz von Essigsäure an N-(2-Aminoethyl)-3-aminopropyltrimethoxysilan eingesetzt. Die Essigsäure wird zusammen mit dem Wasser vorgelegt und N-(2-Aminoethyl)-3-aminopropyltrimethoxysilan zusammen mit dem Methyltrimethoxysilan dazu zugetropft.

Es werden wäßrige Suspensionen von Organopolysiloxan (A) bis (E) erhalten, mit den in Tabelle 1a angegebenen Werten für die elektronenmikroskopisch ermittelten, mittleren Teilchendurchmesser, den Viskositäten und den Feststoffgehalten an Organopolysiloxan.

b) Die jeweils unter a) erhaltene wäßrige Suspension wird in einen mit einer Drallzerstäuberdüse arbeitenden Sprühtrockner (Nubilosa AJM 014, wobei es sich bei der Bezeichnung "Nubilosa" um ein Registriertes Warenzeichen handeln dürfte) bei einem Düsendruck von 5000 hPa (abs.), einem Durchsatz von 2l/Stunde, einer Lufteintrittstemperatur von 170 °C und einer Gasaustrittstemperatur von 85 °C jeweils in ein gut rieselfähiges, in Wasser nicht redispergierbares Pulver umgewandelt.

In der Tabelle 1 b sind für die so erhaltenen Pulver (A) bis (E) jeweils der mittlere Teilchendurchmesser, die spezifische Oberfläche, das Schüttgewicht, der Gewichtsverlust und die Methanol-Zahl angegeben.

Die Pulver (C) und (D) sind beide "Phenylkieselsäuren", weisen aber unterschiedliche Eigenschaften auf. So besitzt das Pulver (C) einen Schmelzpunkt von 92 °C, während das Pulver (D) keinen Schmelz- oder Erweichungspunkt unterhalb 350 °C aufweist. Das Pulver (C) weist einen hohen Resthydroxy- bzw. Restmethoxygehalt von 25 Mol.-%, das Pulver (D) einen niedrigen von 5 Mol.-% auf.

Das Pulver (E) enthält keine auswaschbaren Emulgatoren.

Tabelle 1a : Suspension

| | Organosiliciumverbindung | Emulgator | Feststoffgehalt 2) [Gew.-%] | Viskosität [mPa.s bei 25 °C] | d 3) [nm] |
|---|---|---|---|---|---|
| (A) | 1175 g Methyltrimethoxysilan | 3,5 g Dodecylbenzolsulfonsäure<br>13,5 g Natriumdodecylbenzolsulfonat | 19 | 6,6 | 15 |
| (B) | 485 g Methyltrimethoxysilan<br>527,5 g Vinyltrimethoxysilan<br>(1:1) 1) | 3,5 g Dodecylbenzolsulfonsäure<br>13,5 g Natriumdodecylbenzolsulfonat | 17 | 5,8 | 22 |
| (C) | 690 g Phenyltrimethoxysilan | 12,5 g Dodecylbenzolsulfonsäure | 15 | 12,4 | 37 |
| (D) | 825 g Phenyltrimethoxysilan | 20 g Hexadecyltrimethylammoniumchlorid +) | 18 | 5,4 | 34 |
| (E) | 702,5 g Methyltrimethoxysilan<br>86 g N-(2-Aminoethyl)-3-aminopropyltrimethoxysilan O)<br>(93:7) 1) | 55 g Essigsäure O) | 15 | 22,0 | 66 |

+) Mit N-Methyl-ethanolamin wird pH-Wert eingestellt

O) Emulgator ist bei (E) ein Additionssalz von Essigsäure an N-(2-Aminoethyl)-3-aminopropyltrimethoxysilan

1) Molverhältnis

2) Feststoffgehalt an Organopolysiloxan in der Suspension in Gew.-%, bezogen auf das Gesamtgewicht der Suspension

3) Elektronenmikroskopisch ermittelter, mittlerer Teilchendurchmesser

Tabelle 1b : Pulver

| | D[µm][4)] | $S_{Sp}$[$m^2$/g][5)] | $G_S$[$g.cm^{-3}$][6)] | $H_2O$[Gew.-%][7)] | MeOH-Zahl[8)] |
|---|---|---|---|---|---|
| (A) | 5 | 403 | 0,36 | 0,4 | 20 - 30 |
| (B) | 9 | 199 | 0,30 | 1,1 | 15 - 25 |
| (C) | 12 | 5 | 0,38 | 0,9 | 15 - 25 |
| (D) | 10 | 39 | 0,40 | 0,5 | 20 - 30 |
| (E) | 12 | 4 | 0,33 | 4,5 | 20 - 30 |

4) mittlerer Teilchendurchmesser, ermittelt mittels Rasterelektronenmikroskopie (1000 vermessene Teilchen)

5) spezifische Oberfläche nach BET (bestimmt durch Stickstoffadsorption gemäß ASTM Special Technical Publication No. 51, 1941, Seite 95 ff)

6) Schüttgewicht

7) Gewichtsverlust, bezogen auf das Gesamtgewicht des Pulvers, nach zweistündigem Trocknen bei 105°C (ermittelt nach DIN 53 198)

8) Gew.-% Methanol eines Methanol-Wasser-Gemisches, bezogen auf das Gesamtgewicht des Gemisches, das die Probe gerade benetzt

Beispiel 2:

a) In einen Rohrreaktor mit einem Inhalt von 4l und einem Innendurchmesser von 3 cm, wobei der Reaktorinhalt jeweils bei der in Tabelle 2a angegebenen Temperatur gehalten wird, werden jeweils 4l je Stunde des Wasser-Emulgator-Gemisches aus Tabelle 2a mit Hilfe einer Schlauchpumpe kontinuierlich

eingespeist. Über fünf verschiedene Einspeisungsstellen, die entlang der Längsachse des Rohrreaktors im ersten Drittel des Rohrreaktors angeordnet sind, wird jeweils die Organosiliciumverbindung aus Tabelle 2a mit Hilfe von Dosierpumpen kontinuierlich mit dem jeweils in Tabelle 2a angegebenen Volumenstrom (l/h) zu dem Wasser-Emulgator-Gemisch zugegeben. Das aus dem Rohrreaktor austretende Reaktionsgemisch wird kontinuierlich auf einen Dünnschichtverdampfer gegeben. Im Dünnschichtverdampfer wird kontinuierlich ein Alkanol-Wasser-Gemisch abdestilliert. Die Temperatur und Umlaufgeschwindigkeit des Dünnschichtverdampfers werden dabei jeweils so gewählt, daß jeweils das gleiche Volumen je Zeiteinheit abdestilliert wird, wie durch die Organosiliciumverbindung zugeführt wird. Die wäßrige Suspension wird nach der Destillation kontinuierlich in den Rohrreaktor rückgeführt und dann erneut mit der Organosiliciumverbindung beladen. Nach vier Durchgängen wird jeweils ein Viertel des Volumenstroms der kolloidalen wäßrigen Suspension kontinuierlich abgenommen, drei Viertel des Volumenstroms in den Rohrreaktor kontinuierlich rückgeführt und ein Viertel des Volumenstroms des frischen Wasser-Emulgator-Gemisches kontinuierlich eingespeist. Die Organosiliciumverbindung aus Tabelle 2a wird dabei jeweils über die fünf Einspeisungsstellen, wie oben beschrieben, mit einem konstanten, in Tabelle 2a angegebenen Volumenstrom (l/h) kontinuierlich zudosiert. Es werden wäßrige Suspensionen von Organopolysiloxan (F) bis (H) erhalten, mit den in Tabelle 2a angegebenen Werten für die elektronenmikroskopisch ermittelten, mittleren Teilchendurchmesser, den Viskositäten und den Feststoffgehalten an Organopolysiloxan.

b) Die jeweils unter a) erhaltene wäßrige Suspension wird, wie im Beispiel 1 unter b) beschrieben, sprühgetrocknet.

Es werden gut rieselfähige Pulver (F) bis (H) erhalten, die nicht in Wasser redispergierbar sind. In der Tabelle 2b sind Werte für den mittleren Teilchendurchmesser, die spezifische Oberfläche, das Schüttgewicht, den Gewichtsverlust und die Methanol-Zahl angegeben.

Das Pulver (G) hat einen Schmelzpunkt von 185 °C und ist in aromatischen und polaren aprotischen Lösungsmitteln gut löslich.

Tabelle 2a : Suspension

| Organosiliciumverbindung | [1/h] | Emulgator [in 1 l $H_2O$] | T [°C] | Feststoffgehalt [2) ] [Gew.-%] | Viskosität [mPa.s bei 25°C] | d[3)] [nm] |
|---|---|---|---|---|---|---|
| (F) 320 g/h Methyltrimethoxysilan, 70,5 g/h Dimethyldimethoxysilan (4 : 1)[1)] | 0,42 | 5,0 g Dodecylbenzolsulfonsäure | 65 | 17 | 5,4 | 50 |
| (G) 100 g/h Hexamethyldisiloxan, 257 g/h Tetraethylsilikat (0,5 : 1)[1)] | 0,40 | 5,0 g Dodecylbenzolsulfonsäure | 85 | 17 | 3,3 | 130 |
| (H) 70 g/h Hexamethyldisiloxan, 358 g/h Tetraethylsilikat (0,25 : 1)[1)] | 0,47 | 4,5 g Dodecylbenzolsulfonsäure | 85 | 16 | 3,2 | 122 |

1) Molverhältnis

2) Feststoffgehalt an Organopolysiloxan in der Suspension in Gew.-%, bezogen auf das Gesamtgewicht der Suspension

3) elektronenmikroskopisch ermittelter, mittlerer Teilchendurchmesser

Tabelle 2b : Pulver

| | D[µm] 4) | $S_{Sp}$[m²/g] 5) | $G_S$[g.cm⁻³] 6) | $H_2O$[Gew.-%] 7) | MeOH-Zahl 8) |
|---|---|---|---|---|---|
| (F) | 6 | 194 | 0,40 | 0,6 | 30 - 40 |
| (G) | 16 | 17 | 0,36 | 3,9 | 10 - 35 |
| (H) | 14 | 19 | 0,48 | 3,5 | 10 - 40 |

4) mittlerer Teilchendurchmesser, ermittelt mittels Rasterelektronenmikroskopie (1000 vermessene Teilchen)

5) spezifische Oberfläche nach BET (bestimmt durch Stickstoffadsorption gemäß ASTM Special Technical Publication No. 51, 1941, Seite 95 ff)

6) Schüttgewicht

7) Gewichtsverlust, bezogen auf das Gesamtgewicht des Pulvers, nach zweistündigem Trocknen bei 105 °C (ermittelt nach DIN 53 198)

8) Gew.-% Methanol eines Methanol-Wasser-Gemisches, bezogen auf das Gesamtgewicht des Gemisches, das die Probe gerade benetzt

## Patentansprüche

**1.** Verfahren zur Herstellung von Siliconharzpulvern aus wäßrigen kolloidalen Suspensionen von Organopolysiloxanen, die durch Zugabe von Alkoxysilan zu Wasser in Gegenwart eines Emulgators gewonnen

werden, dadurch gekennzeichnet, daß wäßrige kolloidale Suspensionen von bei Raumtemperatur festen Organopolysiloxanen mit einer durchschnittlichen Teilchengröße von 10 bis 150 nm, die durch Zugabe von mindestens einem Alkoxysilan und/oder dessen Teilhydrolysat und gegebenenfalls im Gemisch mit von Alkoxygruppen freiem Organo(poly)siloxan mit höchstens 8 Siloxaneinheiten je Molekül zu Wasser in Gegenwart von Emulgator mit einer Geschwindigkeit von höchstens 5 Mol Organosiliciumverbindung je Stunde und Liter Wasser und anschließender Abdestillation des hydrolytisch gebildeten Alkanols gewonnen werden, sprühgetrocknet werden, wobei die bei Raumtemperatur festen Organopolysiloxane unter dem Einfluß der Trocknungsbedingungen keine Neigung zum Schmelzen oder Verfilmen aufweisen, die Eintrittstemperatur des Trockengasstroms 100 °C bis 300 °C und die Austrittstemperatur des beim Trocknen gebildeten Gasstroms 60 °C bis 100 °C beträgt und die Siliconharzpulver Teilchengrößen im Bereich von 1 bis 100 µm aufweisen.

2. Verfahren nach Anspruch 1, dadurch gekennzeichnet, daß die bei Raumtemperatur festen Organopolysiloxane aus Einheiten der Formel

$$R_xSi(OR^1)_yO_{\frac{4-x-y}{2}} \quad ,$$

worin
x 0, 1, 2 oder 3, durchschnittlich 1,0 bis 2,0, und y 0, 1 oder 2, durchschnittlich 0,0 bis 0,5, ist und worin R gleich oder verschieden sein kann, ein Wasserstoffatom oder einen einwertigen Kohlenwasserstoffrest mit 1 bis 8 Kohlenstoffatom(en) je Rest, der gegenüber Wasser inerte Substitutenten aufweisen kann, bedeutet und $R^1$ gleich oder verschieden sein kann, ein Wasserstoffatom oder einen Alkyl- oder Alkoxyalkylenrest mit 1 bis 4 Kohlenstoffatom(en) je Rest bedeutet, bestehen.

## Claims

1. Process for producing silicone resin powders from aqueous colloidal suspension of an organopolysiloxane which are obtained by adding alkoxysilane to water in the presence of an emulsifier, characterised in that aqueous colloidal suspensions of organopolysiloxanes having a mean particle size of from 10 to 150 nm which are solid at room temperature and are obtained by adding at least one alkoxysilane and/or a partial hydrolysate thereof and optionally mixed with organo(poly)siloxane which contains no alkoxy groups and contains at most 8 siloxane units per molecule to water in the presence of an emulsifier at a rate of at most 5 mol of organosilicon compound per hour and per litre of water, and subsequently removing the hydrolytically formed alkanol by distillation, are spray-dried, the organopolysiloxanes which are solid at room temperature having no tendency to melt or form films under the influence of the drying conditions, the entry temperature of the dry-gas stream being from 100 °C to 300 °C and the outlet temperature of the gas stream formed on drying being from 60 °C to 100 °C and the silicone resin powders having particle sizes in the range from 1 to 100 µm.

2. Process according to Claim 1, characterised in that the organopolysiloxanes which are solid at room temperature comprise units of the formula

$$R_xSi(OR^1)_yO_{\frac{4-x-y}{2}}$$

in which
x is 0, 1, 2 or 3, on average 1.0 to 2.0, and y is 0, 1 or 2, on average 0.0 to 0.5, and in which R may be identical or different, and denotes a hydrogen atom or a monovalent hydrocarbon radical which has 1 to 8 carbon atoms per radical and which may contain substituents which are inert toward water, and $R^1$ may be identical or different and denotes a hydrogen atom or an alkyl radical or alkoxyalkylene radical having 1 to 4 carbon atoms per radical.

## Revendications

1. Procédé de préparation de poudres de résines de silicones à partir de suspensions aqueuses colloïdales d'organopolysiloxanes obtenues par addition d'un alcoxysilane à de l'eau en présence d'un émulsionnant, procédé caractérisé en ce que l'on sèche par pulvérisation des suspensions aqueuses colloïdales d'organopolysiloxanes solides à la température ambiante, en particules d'une dimension moyenne de 10 à 150 nm, suspensions qui ont été obtenues par addition d'un ou plusieurs alcoxysilanes et/ou de leurs hydrolysats partiels, éventuellement en mélange avec un organo(poly)-siloxane sans groupes alcoxy et ayant au maximum 8 motifs siloxaniques par molécule, à de l'eau en présence d'un émulsionnant, à un débit d'au maximum 5 mol du composé d'organosilicium par heure et par litre d'eau, puis élimination par distillation de l'alcanol résultant de l'hydrolyse, les organopolysiloxanes solides à la température ambiante n'ayant aucune tendance à fondre ou à former des pellicules sous l'effet des conditions du séchage, la température d'entrée du courant du gaz de séchage étant de 100 à 300 °C et la température de sortie du courant gazeux formé au séchage de 60 à 100 °C, et les dimensions des particules des poudres de résines de silicones étant de 1 à 100 µm.

2. Procédé selon la revendication 1, caractérisé en ce que les organopolysiloxanes solides à la température ambiante sont formés de motifs de formule :

$$R_xSi(OR^1)_yO_{\frac{4-x-y}{2}}$$

dans laquelle x est le nombre 0, 1, 2 ou 3, en moyenne de 1,0 à 2,0, et y le nombre 0, 1 ou 2, en moyenne de 0,0 à 0,5, les R éventuels, qui peuvent être identiques ou différents les uns des autres, sont chacun un atome d'hydrogène ou un radical hydrocarboné monovalent ayant de 1 à 8 atomes de carbone et pouvant avoir des substituants inertes à l'égard de l'eau, et les $R^1$ éventuels, qui peuvent aussi être identiques ou différents l'un de l'autre, sont chacun un atome d'hydrogène ou un radical alkyl- ou alcoxyalkylène avec de 1 à 4 atomes de carbone.